# EUROPEAN PATENT SPECIFICATION

(11) **EP 1 746 024 B1**
(45) Date of publication and mention of the grant of the patent: **07.11.2007**
(21) Application number: 05106780.9
(22) Date of filing: 22.07.2005
(51) Int. Cl.: B64C 23/06

(54) **Method of controlling an aircraft in flight**
Verfahren zur Steuerung eines Flugzeugs
Procédé de contrôle d'un avion en vol

(43) Date of publication of application: 24.01.2007
(73) Proprietor: Airbus Deutschland GmbH, 21129 Hamburg (DE)
(72) Inventor: Laporte, Florent, 21129, Hamburg (DE); Hansen, Heinz, 21129, Hamburg (DE)
(74) Representative: Habenicht, Wieland

(56) References cited:
- EP-A- 1 145 954
- EP-A- 1 236 641
- US-A- 6 082 679
- US-B1- 6 422 518

## Description

The present invention relates to a method of controlling an aircraft in flight and in particular, yet not exclusively, to a method of attenuating wake vortices that are generated behind the aircraft. The method of controlling an aircraft in flight comprises the steps of: controlling aircraft engines so as to gather desired propulsion and a predetermined speed with respect to air, and adjusting high-lift elements and control surfaces so that the aircraft follows a desired trajectory.

Aircraft wings in general comprise high-lift elements and control surfaces which are independently operable so as to define the lifting force on the respective wing, high lift elements and control surfaces and hence to render steering the aircraft in an ascending/descending motion or in a rolling motion feasible. As part of the control surfaces there are spoilers provided on each wing which are used in the prior art as an enhancement either for rolling the aircraft (asymmetric deflection of spoilers on both wings) or in case of a steep descent of the aircraft (symmetric deflection of spoilers on both wings).

In flight wake turbulence is generated behind the aircraft. Such wake turbulence mainly consists of vortices that curl up beginning at the trailing edges of the wing as a direct consequence of lift generation on the wing. These vortices in the wake of the aircraft may interfere with other aircrafts that follow and may become even hazardous to them. Therefore it has been proposed in the art to install warning systems for aircrafts adjacent to airports and guiding systems for aircrafts approaching airports.

From US 6 177 888 a wake turbulence warning and caution system and method is known. With this system the wake trajectory of a nearby aircraft is calculated and warning functions are implemented aboard the protected aircraft.

In WO 00/10064 an aircraft approach method and instrument landing system for realising such method is disclosed. Each aircraft approaching an airport is guided along an individual trajectory. The trajectories with each having individual slope angles provide for a higher landing rate while avoiding problems of wake turbulences that require a sufficient distance between subsequent landing aircrafts.

It is known in the art and it has been subject of research that flight spoilers have an effect on creation and decay of such wake vortices. In "Liftgenerated wakes of subsonic transport aircraft", Progress in Aerospace Science 35, 1999, by V. Rossow, the effect of spoilers, engine thrust, and other turbulence injection devices was found to consist primarily of a reduction in the rotary velocities near the core of the vortices.

In "Evaluation of Flight Spoilers for Vortex Alleviation", Journal of Aircraft, August 1977, by D. R. Croom, it was found that flight spoilers on an airplane might be capable of attenuating trailing vortices.

In "Ground-Based Measurements of the Wake Vortex Characteristics of a B-747 Aircraft in Various Configurations", AIAA paper 77-9, 1977, by J. Hallock et al., it was found that by deploying spoilers wake vortices with large cores were produced and in the near wake the vortex peak tangential velocity decay process was enhanced.

With the desired effect of statically deflected spoilers on wake vortices being proven it would be reasonable to use spoilers for vortex attenuation purposes. On the other hand it would be highly uneconomical to fly with constantly deployed spoilers. Hence there is a need to provide a trade off between a minimum disturbance of the aircraft flight performances and a maximum attenuation of the wake vortex, i.e. to optimise the spoiler settings so as to enable on one hand standard aircraft commercial operations and to achieve on the other hand reduced wake turbulence separation distances

In EP 1 145 954 a device and method for reducing trailing vortices behind aircraft on approach to land is described. The device has a turbulence generator in the area of the rear edge of each aeroplane wing, near the outer landing flaps of the wings. The turbulence generators are arranged to generate an interfering turbulence to cancel out the aeroplane turbulence. The turbulence generators are preferably formed as additional flaps, whose foot points are in an area of 10% of the half-width of the outer landing flap ends at the wing and 60% of the profile depth of the wing. The flaps can be folded away when not in use.

It is an object of the present invention to provide a method of controlling an aircraft so as to mitigate the effect of wake turbulence, in particular on aircrafts that follow the generating aircraft or intersect its trajectory.

This object is achieved by the method of controlling an aircraft in flight according to claim 1. Dependent claims are directed to preferred embodiments of the invention.

The inventors found that a vortex of particular characteristics is less hazardous to an encountering aircraft than vortices with other characteristics. Such desired vortex characteristics are achieved by deflecting spoilers on the aircraft wings to that degree at which the wake vortex characteristics has significantly changed. In other words the optimum spoiler setting must be chosen so that flight disturbances are minimized and vortex attenuation is maximized by changing specific vortex characteristics. Studies showed that e.g. the peak core tangential velocity is apt for characterising a vortex. The vortex peak core velocity is to be reduced in order to attain less hazardous vortices. Another characteristic value of vortices is the vortex core radius that is to be increased in order to attain less hazardous vortices. Both effects are achieved at the same time by setting the spoiler(s) accordingly. The optimum spoiler setting is determined depending on the flight phase and it is maintained constant during the considered flight phase.

Accordingly the invention provides a method of controlling an aircraft in flight with the steps of claim 1.

Preferably the method includes the following features:

the wake vortex parameter is a peak vortex core tangential velocity;

the wake vortex parameter is a vortex core radius;

the wake vortex parameter is a vortex spacing;

the desired trajectory covers the take off phase and/or landing phase of the aircraft.

It is an advantage of the invention that airport throughput may be increased due to reduced aircraft safe separation distances which otherwise would have to be observed for wake turbulences. With the invention the longitudinal distances may thus remain under those that are defined in the "Wake Turbulence Separation Standards" and are currently applied to aircrafts approaching to the terminal area in sequence. The existing standards are based on the maximum take-off weight category of the leader and the follower aircraft considered. They are usually given in nautical miles (NM). The application of Wake Turbulence Separation Standards at airport limits the number of aircrafts that are allowed to land on a given runway during a given period of time. This limitation is an increasingly important factor that contributes to reach a capacity limit at airports with intense traffic. Further the proposed method of spoiler setting optimization may be readily implemented and is thus also applicable with existing aircrafts.

The invention will be described in further detail in the following, by way of example only, with reference to the accompanying drawings.

Fig. 1 shows a general type of aircraft wing, apt to realizing the method according to the invention.

Fig. 2 illustrates the specific vortex parameter as a function of a spoiler deflection angle as a basis for an embodiment of the invention.

Fig. 3A and 3B illustrate the effect of the spoiler deflection on vortex peak core velocity and vortex core radius, respectively, achieved by an embodiment of the invention.

The drawings are not to scale. Similar elements and elements with equal functions have the same reference signs.

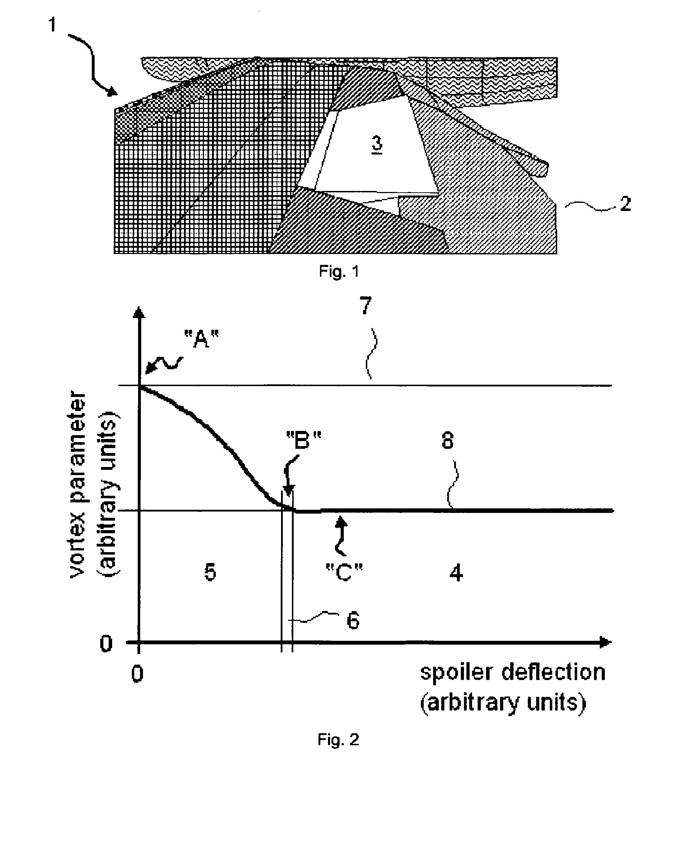

In Fig. 1 there is depicted a part of an aircraft wing 1. The wing 1 comprises several high-lift elements 2. In addition spoiler elements 3 are provided, only one of which is shown in Fig. 1 for sake of clarity. These spoilers are used for enhancement of roll control of the aircraft when asymmetrically deflected, i.e. deflected independently of each other on both wings, or for enhancement of a steep descent or a steep climb-out of the aircraft when symmetrically deflected.

Since the studies of the inventors proved the effect of the spoilers on the generation and the development of wake vortices it is the objective of the present invention to define an optimum spoiler setting for approaching and starting aircrafts. In other words a best compromise between maximization of the effect of one or multiple spoilers on the wake vortex alleviation and minimization of the impact of one or multiple spoilers on the aircraft performance is sought for. This aspect was not considered in the prior art.

Fig. 2 shows the influence of spoiler deployment on vortex parameters. The spoiler deflection angle is presented on the abscissa in arbitrary units; the vortex parameter is presented on the ordinate, also in arbitrary units. The vortex parameter as a function of the spoiler deflection is displayed as a bold line.

In general two regions can be distinguished in Fig. 2. In a first region 4 the vortex parameter is substantially independent of the spoilers and indeed takes its minimum value which is defined to be zero. This region is to the right in Fig. 2.

In a second region 5 there is a significant change of the vortex parameter with a small change of the spoiler deflection degree, and eventually the vortex parameter approximates its maximum in region 5. This region is to the left in Fig. 2. It has been demonstrated in ground and flight tests that symmetric spoiler deflection in region 5 has the potential of wake alleviation if the spoiler deflection exceeds more than 40°. However, such large deflection angles would deteriorate the overall aircraft performance and would thus restrain spoiler setting from a widespread application in flight, namely because the use of spoilers (in airbrake mode) entails lift loss and increased drag. Although these features may be used on purpose for airbrake or steep approach applications, spoiler deflection must be minimized in standard approach/landing phases.

Therefore, according to the invention the optimum for spoiler setting in order to reduce vortex effect on a follower aircraft as much as possible is to set the spoiler deflection angle to the value at the intersection of regions 4 and 5. Here the vortex parameter may be changed rapidly with small changes of the deflection angle and so the optimum may be easily found; on the other hand the flight performance is affected as little as possible, since the actual vortex parameter is still close to its minimum. In summary, the first and second regions 4 and 5, respectively, of spoiler setting angles are defined by differentiating the specific vortex parameter as to the spoiler setting angle. If the first derivative is substantially zero, the region is defined to be the first region 4; if the first derivative is not zero, i.e. is significantly different from zero, the region is defined to be the second region 5. The optimum for the spoiler setting is found at the point of intersection 6 of said first and second regions 4 and 5 which actually is rather a narrow range of spoiler angles than a singular point.

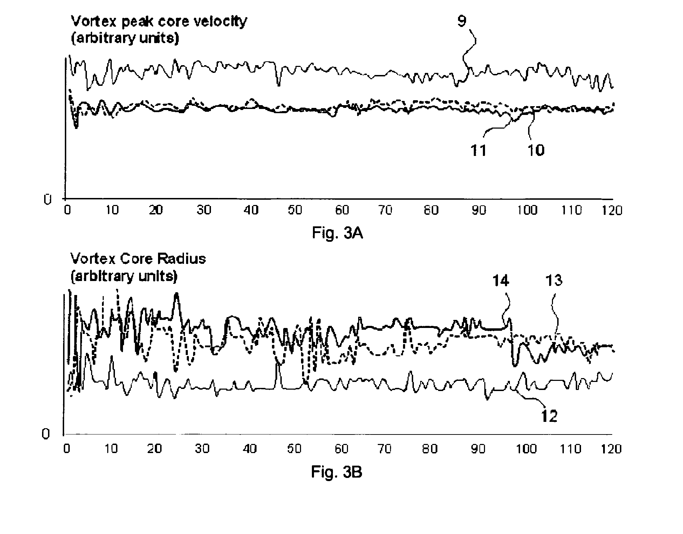

The effect of deflecting the spoiler on various vortex parameters will further be explained with reference to Fig. 3a and Fig. 3B.

Fig. 3A and Fig. 3B show the evolution of specific wake vortex characteristics with the distance "x" downstream an aircraft model of wingspan "b" as a function of the deflection angle of a single spoiler segment. The vortex characteristics measured are the vortex peak core tangential (circumferential) velocity and the vortex core radius. However, other vortex characteristics may be used as well, e.g. the vortex spacing.

Fig. 3A shows a recorded diagram of the vortex peak core tangential velocity. Curve 9 reflects the vortex velocity with retracted spoilers, i.e. curve 9 corresponds to the setting at "A" in Fig. 2. This velocity is rather high and correspondingly such vortices may become hazardous to following aircrafts. With spoilers at 20°, curve 11, the vortex peak core tangential velocity is significantly lowered. Curve 11 corresponds to "C" in Fig. 2; that is the spoiler deflection is already in region 4. Yet a spoiler setting of 20° entails uneconomical flight conditions and is therefore rather undesired. It will be appreciated nevertheless that the effect on the vortex peak velocity is also achieved at a spoiler angle of 15°, curve 10. Curve 10 corresponds to the spoiler setting at "B" in Fig. 2. With a spoiler angle of 15°, however, the flight condition of the aircraft is much more economical. Curve 10 therefore is within the desired intersection region 6 in Fig. 2.

The effects of spoiler settings on vortex peak core tangential velocities are confirmed by measurements of the respective vortex core radii. In Fig. 3B there are the radii of vortices shown at the same spoiler settings as in Fig. 3A. The smallest vortex radius is attained at full retraction of the spoilers, curve 12 corresponding to the spoiler setting at "A" in Fig. 2. The vortex radius becomes greater the greater the spoiler deflection is. However also as with vortex radii the effect on the radius does not change much between a spoiler angle of 15°, curve 13 at "B", and a spoiler angle of 20°, curve 14 at "C". So also with vortex radii as the characteristic value of the wake vortex the best compromise for spoiler setting turns out to be at 15°, "B", in this example, corresponding to intersection 6 in Fig. 2.

The changes of the specific vortex characteristics as a function of spoiler deflection angle were measured in this experiment up to a deflection angle of 20°. The optimized spoiler setting was found to be at approximately 15° in this specific case. However, the optimum setting depends on the aircraft type and aircraft configuration, the latter being linked directly to the flight phase.

As apparent from Fig. 3A and 3B as the specific vortex parameter either the maximum vortex core velocity or the vortex peak core velocity may be taken. Other vortex parameters may be the vortex core radius and also the vortex spacing. Any of these vortex characteristics and in particular vortex velocities may be measured e.g. by a LIDAR (light detection and ranging) system, by a laser-Doppler velocimeter, an array of monostatic acoustic sounders, and an array of propeller anemometers, or by other systems. These apparatuses are preferably deployed on ground, and measurements are performed when a test aircraft passes them by. The resulting relation between the spoiler deflection angle and the respective characteristic vortex parameter is recorded and stored, and after further processing the relation is memorized in the aircraft and may be used when the effect of wake vortices on follower aircrafts is to be prevented or mitigated.

As an alternative, the relationship between the deflection angle of spoilers and a specific vortex parameter may be obtained by airborne test apparatuses instead of test apparatuses on ground. In this case the apparatuses may be installed on other aircrafts or on the tested aircraft itself.

It should be clear from the above that the invention is applicable either to the deployment of one spoiler or to the deployment of multiple spoilers. This will only depend on the respective aircraft and the actual flight situation. The selection of spoilers segments to be used may also be derived during flight tests.

With the invention it will be possible for the first time that aircrafts benefit from reduced Wake Turbulence Separation Standards with respect to their weight category if the aircraft is equipped with a wake alleviation apparatus such as spoilers or any other means and the wake alleviation method according to the invention is implemented. In fact, the invention is expected to provide significant reduction of Wake Turbulence Separation Standards for any given aircraft pair of leader/follower considered.

### Reference numerals

1. aircraft wing
2. high-lift element (flap)
3. spoiler element
4. region without change of vortex parameter
5. region with significant change of vortex parameter
6. optimum region of change of vortex parameter
7. maximum effect of spoiler on vortex parameter
8. minimum effect of spoiler on vortex parameter
9. vortex peak core tangential velocity with retracted spoilers
10. vortex peak core tangential velocity with spoilers at 15°
11. vortex peak core tangential velocity with spoilers at 20°
12. vortex core radius with retracted spoilers
13. vortex core radius with spoilers at 15°
14. vortex core radius with spoilers at 20°

"A" spoilers fully retracted (region 5)

"B" spoilers at 15° (region 6)

"C" spoilers at 20° (region 4)

## Claims

1. A Method of controlling an aircraft in flight with the steps of:
controlling aircraft engines so as to gather a desired propulsion and a predetermined speed with respect to air, and
adjusting high-lift (2) and control surfaces so that the aircraft follows a desired trajectory,
**characterized by**
determining a wake vortex parameter as a function of a spoiler setting angle including a first region (4) of said spoiler setting angles in which the first derivative of said specific vortex parameter as to said spoiler setting angle is substantially zero, and a second region (5) of said spoiler setting angles in which the first derivative of said specific vortex parameter as to said spoiler setting angle is not zero; and
adjusting said spoiler setting angle to a point of intersection (6) of said first and second regions (4, 5).

2. Method according to claim 1, wherein the wake vortex parameter is a peak vortex core tangential velocity.

3. Method according to claim 1, wherein the wake vortex parameter is a vortex core radius.

4. Method according to claim 1, wherein the wake vortex parameter is a vortex spacing.

5. Method according to any of the preceding claims, wherein the desired trajectory covers the approach for landing of the aircraft.

## Patentansprüche

1. Verfahren zum Steuern eines Flugzeugs im Flug mit den Schritten:
Steuern des Flugzeugtriebwerks derart, dass ein gewünschter Vortrieb und eine vorgegebene Geschwindigkeit gegenüber Luft erreicht wird,
Einstellen von Auftriebs-Elementen (2) und Steuerflächen, so dass das Flugzeug einer gewünschten Trajektorie folgt,
**gekennzeichnet durch**
Bestimmen eines Schleppwirbelparameters in Abhängigkeit von einem Spoiler-Einstellwinkel mit:
einem ersten Bereich (4) der besagten Spoiler-Einstellwinkel, in welchem die erste Ableitung des besagten spezifischen Wirbelparameters nach dem Spoiler-Winkel im wesentlichen Null ist, und
einem zweiten Bereich (5) der besagten Spoiler-Einstellwinkel, in welchem die erste Ableitung des besagten spezifischen Wirbelparameters nach dem Spoiler-Winkel nicht Null ist, und
Einstellen des Spoiler-Einstellwinkels auf einen Schnittpunkt (6) von dem ersten und dem zweiten Bereich (4, 5).

2. Verfahren nach Anspruch 1, bei dem der Schleppwirbelparameter eine tangentiale Wirbelkernspitzengeschwindigkeit ist.

3. Verfahren nach Anspruch 1, bei dem der Schleppwirbelparameter ein Wirbelkernradius ist.

4. Verfahren nach Anspruch 1, bei dem der Schleppwirbelparameter ein Wirbelabstand ist.

5. Verfahren nach einem der vorangehenden Ansprüche, bei dem die gewünschte Trajektorie den Landeanflug des Flugzeugs abdeckt.

## Revendications

1. Procédé de contrôle d'un avion en vol comprenant les étapes consistant à :
contrôler les moteurs de l'avion de manière à obtenir une propulsion souhaitée et
une vitesse prédéterminée par rapport à l'air, et
ajuster les éléments de haute portance (2) et les surfaces de contrôle de manière à ce que l'avion suive une trajectoire souhaitée,
**caractérisé par** les étapes consistant à :
déterminer un paramètre de tourbillon de sillage en fonction d'un angle de réglage de déporteur comprenant :
une première région (4) desdits angles de réglage de déporteurs dans laquelle la première dérivée dudit paramètre de tourbillon spécifique par rapport au dit angle de réglage de déporteur est sensiblement égale à zéro, et
une deuxième région (5) desdits angles de réglage de déporteurs dans laquelle la première dérivée dudit paramètre de tourbillon spécifique par rapport
au dit angle de réglage de déporteur n'est pas égale à zéro ; et
ajuster ledit angle de réglage de déporteur à un point d'intersection (6) de ladite première région (4) et de ladite deuxième région (5).

2. Procédé selon la revendication 1, dans lequel le paramètre de tourbillon de sillage est une vitesse tangentielle de coeur de tourbillon de crête.

3. Procédé selon la revendication 1, dans lequel le paramètre de tourbillon de sillage est un rayon de coeur de tourbillon.

4. Procédé selon la revendication 1, dans lequel le paramètre de tourbillon de sillage est un espacement de tourbillon.

5. Procédé selon l'une quelconque des revendications précédentes, dans lequel la trajectoire souhaitée couvre l'approche d'atterrissage de l'avion.
